# EUROPEAN PATENT SPECIFICATION

(11) **EP 2 451 144 B1**
(45) Date of publication and mention of the grant of the patent: **07.12.2016**
(21) Application number: 10788641.8
(22) Date of filing: 24.03.2010
(51) Int. Cl.: H04M 3/42

(54) **SYSTEM, METHOD AND APPARATUS FOR PREFERENCE PROCESSING FOR MULTIMEDIA RESOURCES IN COLOR RING BACK TONE SERVICE**
SYSTEM, VERFAHREN UND VORRICHTUNG ZUR BEVORZUGTEN BEARBEITUNG FÜR MULTIMEDIEN-RESSOURCEN IN EINEM CRBT-DIENST
SYSTÈME, PROCÉDÉ ET APPAREIL DE TRAITEMENT DE PRÉFÉRENCE DE RESSOURCES MULTIMÉDIAS DANS UN SERVICE DE TONALITÉ DE RETOUR D'APPEL

(30) Priority: 30.06.2009 CN 200910151547
(43) Date of publication of application: 09.05.2012
(73) Proprietor: ZTE Corporation, Shenzhen, Guangdong 518057 (CN)
(72) Inventor: DONG, Hao, Shenzhen Guangdong 518057 (CN); HUANG, Zheng, Shenzhen Guangdong 518057 (CN)
(74) Representative: Mozzi, Matteo
(86) International application number: PCT/CN2010/071259
(87) International publication number: WO 2010/145245

(56) References cited:
- WO-A1-2006/115838
- WO-A1-2008/141546
- CN-A- 1 681 284
- CN-A- 101 142 776
- US-A1- 2007 127 655
- US-A1- 2007 127 655

## Description

### Field of the Invention

This invention relates to the field of mobile communication, more specifically, to a system, method and apparatus for preference processing of multimedia resources in color ring-back tone service.

### Background of the Invention

Traditional color ring-back tone service is customized by a called party, and provides the calling party with a sweet music or a greeting to substitute the service of normal ring-back tone. With the development of the communication network and the improvement of the performance of user's terminal equipment, color ring-back tone service has been expanded. During the establishment of a point-to-point call, when a called user terminal is ringing, the calling user terminal receives an audio and/or video segment, or other multimedia resources like characters, pictures and animations preset by the called user terminal. Meanwhile, a user can set which resources to present and how to present those resources, which is called the users preference setting of color ring-back tone.

Generally, only simple information such as the calling party's number and time period information can be set in the user preference setting functions provided by the existing color ring-back tone service.

On the other hand, the combination of multimedia color ring-back tone service and other services can bring excellent users experiences. For example, presence service can provide the current online presence information of a user, including the availability of the terminal and the state set by the user himself, such as "Idle", and "Busy". If a calling user can acquire the presence information of the called user instead of some brief ring-back tone resources set by the called user in prior color ring-back tone service when the calling user makes a telephone call, it will present the calling user with pleasant surprise. For another example, the combination of multimedia color ring-back tone service and the location service, i.e. including location information of the called user within the ring-back tone media or playing different ring tone resources according to different locations of the called user, can also present the calling user with excellent service experience.

The new services stated above also brings a new technical requirement: how to perform the complex preference processing for multimedia color ring-back tone which a user would like to present according to the above mentioned information related to the user.

WO2008/141546 A1 discloses a method and system of the prior art for playing the ring back tone in the IMS network.

US 2007/0127655 A1 relates to a method and system of the prior art for providing multimedia portal contents in communication system.

WO2006/115838 A1 describes a system and method of the prior art for providing presence information to voicemail users.

### Summary of the Invention

The purpose of this invention is to realize the priority policy processing of complex preference in color ring-back tone service.

For realizing the purpose, a system for preference processing of multimedia resources in color ring-back tone service is provided by this invention, which comprises: a multimedia color ring-back tone Customized Multimedia Ringing (CMR) Server, adapted to determine the resources which need to be presented based on a priority policy and present the resources; and a CMR User Interface Unit, which is connected to the CMR Server. A user inquires and sets a priority policy by the CMR User Interface Unit.

The system also includes a Presence Server, adapted to acquire the presence information of a user and feed back the presence information to the CMR Server; and a Location Server, adapted to acquire the location information of a user and feed back the location information to the CMR Server.

In addition, for realizing the purpose, a method for preference processing of multimedia resources in color ring tone service is provided by this invention, which includes the following steps: when a user is called, acquiring related information of the user, determining the highest priority sub-policy among the one or multiple sub-policies set by the user as the priority policy, and presenting the resources corresponding to the priority policy when related information matches the condition information contained in the priority policy.

The related information comprises one or multiple of: user presence information, location information, called time information and called date information as well as ID information of the calling user.

In addition, for realizing the purpose, an apparatus for preference processing of multimedia resources in color ring-back tone service is provided by this invention, which comprises: a Related Information Acquiring Unit, adapted to acquire related information of a user when the user is called; a Sub-policy Determination Unit, adapted to determine the highest priority sub-policy among one or multiple sub-policies set by the user as the priority policy; and a Presence Unit, adapted to present resources corresponding to the priority policy when related information matches the condition information contained in the priority policy.

By implementing the system, method and apparatus of this invention, a user can inquire and set a priority policy corresponding to complex preference, thus the system can determine the highest priority policy under specified conditions, so as to present preference resources set by users.

### Brief Description of the Drawings

The drawings illustrated herein are used to provide a further understanding of this invention, and constitute one part of this application. The exemplary embodiments of the invention and the illustrations thereof are used for explanation, and do not constitute limitations on the invention. In the Drawings:
Fig. 1 shows a block diagram of the system for preference processing of multimedia resources in color ring-back tone service according to this invention;
Fig.2 shows a schematic diagram of the operating procedures for preference setting according to the method of this invention; and
Fig.3 shows a flow chart of the method for preference processing of multimedia resources in color ring-back tone service according to this invention.

### Detailed Description of the Embodiments

Hereinafter, the system, method and apparatus for preference processing of multimedia resources in color ring-back tone service will be described with reference to the drawings.

In the embodiment of this invention, the user preference setting of multimedia color ring-back tone presentation comprises a preset policy (i.e. preference rule set). This rule set comprises several sub-policies (i.e. rule sub-sets), and these rule sub-sets can be divided into two types: Simplex Rule Sub-set and Complex Rule Sub-set. Each Simplex Rule Sub-Set comprises preference rules of the same type, and each preference rule comprises several condition fields and one target field. Condition fields describe the conditions that should be satisfied by this rule, and constitute a Condition Module, while the target field describes the target results caused by this rule after the above mentioned conditions are satisfied, and constitutes a Target Module; furthermore, the conditions generated by the condition fields of any two preference rules within the same rule sub-set do not overlap with each other. A Complex Rule Sub-set comprise such rules: the condition fields of each rule comprise two or more different types of preference rule conditions, and the target field of this rule describes the target results caused by this rule after the complex conditions are satisfied. Each rule sub-set corresponds to one priority, and the priority of different rule sets differs from each other.

The following is the analysis of several Simplex Rule Sets.

Time Rule Set, wherein the conditions of each rule comprise start time and end time, and the target field indicates the presented ring tone resources or resource box ID after the conditions of this rule are satisfied. The resource box is the resource collection composed by multiple resources which can be ordered by a user at one time. The determination logic of each rule is that the time of conducting calling is precisely between the start time and end time of this rule; the actuating logic is to present the resources described by the target field after the conditions are satisfied.

Date Rule Set, wherein the conditions of each rule comprise start date and end date, and the target field indicates the presented ring tone resources or resource box ID after the conditions of this rule are satisfied. It needs to be noted that the date format in the conditions can also be a certain day in every week. The determination logic and actuating logic of the rule in this set are similar to those of Time Rule Set.

Calling ID Rule Set, wherein the condition of each rule is the number ID or number group ID of the calling user, and the target field indicates the presented ring tone resources or resource box ID after the condition of this rule is satisfied. Thus it can be determined whether the condition of the rule is satisfied according to the calling number ID when calling is conducted, and the target of this rule will be performed if the condition is satisfied.

User Presence Rule Set, wherein the condition of each rule is the acquired current presence information of the called user, and the target field indicates the presented ring tone resources or resource box ID after the condition of this rule is satisfied. The condition of this rule can comprise some specific state-describing information fields, such as "Power Off' and "Busy" etc. of the information fields of terminal equipment, and "Busy" and "At Meeting" etc. of the user state information fields of a user. Resources described by the target field can be some resource templates corresponding to the information described in the condition fields. For example, if a user is "At Meeting", the voice prompt will be "Sorry, I am at a meeting now, please contact me later..."

User Location Rule Set, wherein the condition of each rule is the acquired current location information of the called user, and the target field means the presented ring tone resources or resource box ID after the condition of this rule is satisfied. With regard to the location type rules, target resources can be voice prompt acquired by transforming and combining the user's geographic location information through text.

There are also complex rules combined by the conditions of the above mentioned two or more types of rules, except the above mentioned Simple Rule Sets. For example:
Specific ring tone resources are presented under the condition that both a certain time period and a certain calling user group are satisfied simultaneously.

All the complex rules constitute Complex Rule Set of a user's preference setting.

Each rule set corresponds to one priority, and the priority of different rule sets differs from each other, which is used for performing determination logic according to order of priority when presence control is performed. Users can set the priority of each rule set.

The system according to this invention includes: a Customized Multimedia Ringing Server (CMRS), adapted to store and receive rules set by users, and meanwhile conduct resource presence control during call-connection; and a CMR Portal (CMRP) or CMR Management Client (CMRMC), adapted to be set and operated by users. It also comprises a Presence Server (PS), adapted to acquire the presence information of a user, and a Location Server (LS) adapted to acquire the geographic location information of a user.

A user inquires and sets the preference rules stored in the CMR Server by the CMR Portal or the CMR Management Client. When a call triggers the CMR, the Presence Control Module inquires the stored preference rules based on current user-related information and other information, to acquire and present corresponding target resources.

Specifically, the units in the system and their functions according to the present invention are described as follows:
Customized Multimedia Ringing Server (CMRS): the core device of the service described in the present invention, which is adapted to determine the resources which need to be presented based on a priority policy and presents the resources;
CMR User Interface Unit, which is connected to the CMR Server. A user inquires and sets a priority policy with the CMR User Interface Unit. Wherein, the CMR User Interface Unit can be a CMR Portal and the user performs inquiry and setting of the preference rules through Web/WAP; the CMR User Interface Unit can also be a CMR Management Client residing in the user terminal, and interacts with the CMR Server in the form of client, performing inquiry and setting of the preference rules;
Presence Server (PS): provides the presence information a subscribed user of the service described in the invention, for instance, On-Line, Busy and Out Of Service, etc.;
Location Server (LS): acquires the location information of a user and feeds back the location information to the CMR Server. The Location Server comprises: a Geography Server, adapted to provide the geographical location information in the form of longitude and latitude of a subscribed user of the service described in the invention; a Geographical Information System (GIS) Module, adapted to convert the longitude and latitude coordinate of that geographical area that the user terminal locates into the location information which can be understood by a user. The GIS Module can be located in LS, and then the CMR Server directly acquires the user's location information in the form of text, such as city, block, and name of the landmark building. The GIS Module can also be located in the CMR Server, and then the CMR Server acquires the longitude and latitude coordinate of a user terminal from LS, and then the GIS Module converts them into the geographic location information which can be understood by a user.

Further, a CMR Server comprises:
Storage Unit, adapted to store the preference rules set by a user;
Inquiry Unit, adapted to receive user's inquiry request, and return the rule information acquired from Rule Storage Module to the user by the CMR Portal or Management Client;
Setting Unit, adapted to receive user's setting operations, and store the setting results into Rule Storage Module;
Presence Control Unit, adapted to perform logical judgment based on the rules in the Storage Unit when a call occurs, determine the resources which need to be presented, and present the resources.

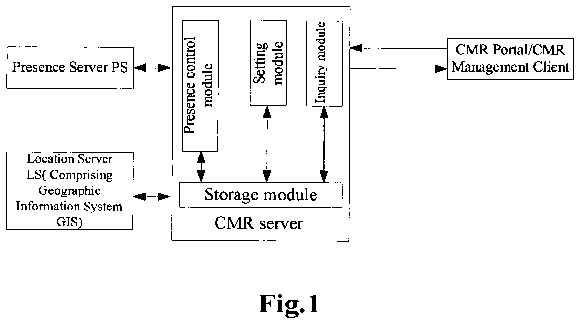

Fig. 1 is a block diagram of a system for preference processing of multimedia resources in color ring-back tone service according to this invention.

"Rules" in Rule Set is defined as follows:

Time Rule Set: every rule therein comprises the following fields:

| Field Name | Data Type | Description | Field Category |
|---|---|---|---|
| FromTime | Time | Start time | Condition |
| ToTime | Time | End time | Condition |
| ResourcelD | String | Resource Identifier | Target |

Date Rule Set: every rule therein comprises the following fields:

| Field Name | Data Type | Description | Field Category |
|---|---|---|---|
| FromDate | Date | Start date | Condition |
| ToDate | Date | End date | Condition |
| ResourcelD | String | Resource Identifier | Target |

Calling ID Rule Set: every rule therein comprises the following fields:

| Field Name | Data Type | Description | Field Category |
|---|---|---|---|
| CallingID | String | Calling No. or Calling Group Identifier | Condition |
| ResourcelD | String | Resource Identifier | Target |

User Presence Rule Set: every rule therein comprises the following fields:

| Field Name | Data Type | Description | Field Category |
|---|---|---|---|
| Presencelnfo | String | User's Presence Information | Condition |
| ResourcelD | String | Resource Identifier | Target |

User Location Rule Set: every rule therein comprises the following fields:

| Field Name | Data Type | Description | Field Category |
|---|---|---|---|
| Location | String | User's Geographical Location Information | Condition |
| ResourcelD | String | Resource Identifier | Target |

Complex Rule Set: the condition fields included in the rules therein can be the combination of the condition fields in the simplex rules above, and the target field is the target resource ID when the complex rules are satisfied. For example, time condition and user's presence condition can be combined into the following complex rules:

| Field Name | Data Type | Description | Field Category |
|---|---|---|---|
| FromTime | Time | Start time | Condition |
| ToTime | Time | End time | Condition |
| Presencelnfo | String | User's Presence Information | Condition |
| ResourcelD | String | Resource Identifier | Target |

The system can be set as the combination of different types of conditions based on user's requirements to obtain various complex rules, which is not repeated herein.

By setting different priorities (Data Type Integer) for every rule set above, the Presence Control Module can perform logical judgment according to the priority to acquire the resource information which should be presented.

The storage of the above rules can be in the form of Database (DB) as well as XML document.

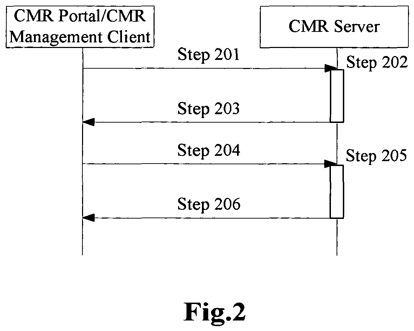

Fig.2 shows a schematic diagram of the operating procedures for preference setting according to the method of this invention. The Steps therein are explained as follows:
Step 201: CMR Portal or CMR Management Client sends the request for inquiring preference rules to CMR Server;
Step 202: CMR Server acquires the information of preference rules from the internal Storage Module;
Step 203: CMR server returns the information of preference rules;
Step 204: CMR Portal or CMR Management Client sends the request for setting preference rules to CMR Server;
Step 205: CMR Server performs check of the setting request, and performs the operations of insertion/modification/deletion to the rules in the Storage Module if the setting request is correct;
Step 206: CMR Server returns the operation result.

The interactive protocols in the above Steps can be based on HTTP Protocol, for example, XCAP Protocol or SOAP Protocol.

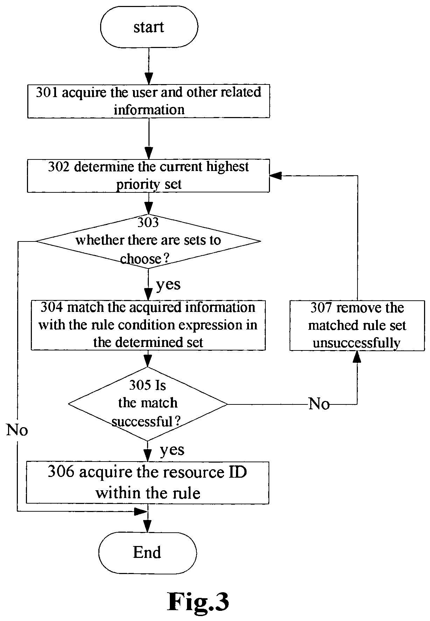

Fig. 3 is a flowchart of the logical judgment through which the Presence Control Module selects the ringing resources during the calling, after a CMR user performs the preference setting described in the present invention. The Steps are as follows:
Step 301: Acquire a user and other related information;
Step 302: Determine the current rule set with the highest priority in existing multiple preference rule sets;
Step 303: Determine whether there are rule sets to select, and if yes, execute Step 304; or else, return the message of rule match failure, or return the defaulted resource ID, and the procedure ends;
Step 304: Perform matching between the acquired information and the determined rule condition expressions in the highest priority sets;
Step 305: If the matching succeeds, execute Step 306; or else, execute Step 307;
Step 306: Acquire the target resource ID from the rules that have been matched successfully, and the procedure ends;
Step 307: Remove the rule sets that have been matched unsuccessfully, and return to Step 302.

Hereto, the Presence Control Module acquires the resource ID which needs to be presented.

## Claims

1. A system for preference processing of multimedia resources in a color ring-back tone service, comprising:
a customized multimedia ringing, CMR, server, adapted to determine resources, which need to be presented based on a priority policy, and present the resources; and
a CMR user interface unit, which is connected to the CMR server, and by which a user inquires and sets the priority policy;
**characterised in that**
the priority policy comprises the following types: Simplex Rule Sub-set and Complex Rule Sub-Set,
each Simplex Rule Sub-set comprises a plurality of preferences rules, wherein condition fields of the plurality of preference rules contain preference rule conditions whose types are the same, and
each Complex Rule Sub-set comprises a plurality of preference rules, wherein condition fields of each of the plurality of preference rules comprise two or more preference rule conditions whose types are different,
the types of the preference rule conditions comprise at least one of the followings: time, date, calling id, user presence, user location.

2. The system according to Claim 1, **characterized in that** the CMR server further comprises:
a storage unit, adapted to store the priority policy;
an inquiry unit, adapted to respond to an inquiry request from the user, and return the priority policy to the user by the CMR user interface unit;
a setting module, adapted to respond to a setting request from the user, and store the priority policy set by the user into the storage unit; and
a presence control unit, adapted to determine the resources which need to be presented based on the priority policy, and present the resources.

3. The system according to Claim 1, **characterized by** further comprising:
a presence server, adapted to acquire presence information of the user, and feed back the presence information to the CMR server; and
a location server, adapted to acquire location information of the user, and feed back the location information to the CMR server.

4. The system according to Claim 3, **characterized by** further comprising:
a geography server, adapted to acquire a geographical longitude and latitude coordinate of the user; and
a geographical information system, GIS, unit, adapted to convert the geographical longitude and latitude coordinate into text information of a location, and thus generate the location information.

5. The system according to Claim 3, **characterized in that** setting conditions of the priority policy comprise the following information: user presence information, user location information, time information, date information, and calling ID information.

6. The system according to Claim 5, **characterized in that** the priority policy comprises one or multiple of the following sub-policies: user presence policy, user location policy, time policy, date policy, and calling ID policy.

7. The system according to Claim 6, **characterized in that**,
the user presence policy comprises a presence condition and a presence target module, when the presence information acquired by the presence server matches the presence condition, the presence control unit presents the presence target resources corresponding to the presence target module;
the user location policy comprises a location condition and a location target module, when the location information acquired by the location server matches the location condition, the presence control unit presents the location target resources corresponding to the location target module;
the time policy comprises a time condition and a time target module, when called time information of the user matches the time condition, the presence control unit presents the time target resources corresponding to the time target module;
the date policy comprises a date condition and a date target module, when called date information of the user matches the date condition, the presence control unit presents the date target resources corresponding to the date target module; and
the calling ID policy comprises a calling ID condition and a calling ID target module, when ID information of calling the user matches the calling ID condition, the presence control unit presents the calling ID target resources corresponding to the calling ID target module.

8. The system according to Claim 6 or 7, **characterized in that** each of the sub-policies is configured with priorities different from each other, and the sub-policy with highest priority among the priority policies invalidates the other sub-policies.

9. The system according to Claim. 8, **characterized in that** the priority is set by the user of the CMR user interface unit.

10. The system according to Claim 1, **characterized in that**, the CMR user interface unit is a CMR portal, wherein, the user inquires and sets the priority policy by Web/WAP.

11. The system according to Claim 1, **characterized in that** the CMR user interface unit is a CMR management client, configured on the terminal of the user and used for interacting with the CMR server in the form of client to inquire and set the priority policy.

12. A method for preference processing of multimedia resources in a color ring-back tone service, comprising the steps of:
acquiring (301) related information of a user when the user is called;
determining (302) a sub-policy with the highest priority among one or multiple sub-policies set by the user as a priority policy; and
presenting resources corresponding to the priority policy when the related information matches condition information included in the priority policy,
**characterized in that**
the priority policy comprises the following types: Simplex Rule Sub-set and Complex Rule Sub-Set,
each Simplex Rule Sub-set comprises a plurality of preference rules, wherein condition fields of the plurality of preference rules contain preference rule conditions whose are the same, and
each Complex Rule Sub-set comprises a plurality of preference rules, wherein condition fields of each of the plurality of preference rules comprises two or more preference rule conditions whose types are different,
the types of the preference rule conditions comprise at least one of the followings: time, date, calling id, user presence, user location.

13. The method according to Claim 12, **characterized in that** the related information comprises one or more of presence information, location information, called time information and called date information of the user and ID information of calling the user.

14. The method according to Claim 13, **characterized in that** the sub-policies are respectively configured with priorities different from each other, and the sub-policy comprises one or more of the following:
user presence policy comprising presence condition, wherein when the presence information matches the presence condition, the resource corresponding to the presence condition is presented;
user location policy comprising location condition, wherein when the location information matches the location condition, the resource corresponding to the location condition is presented;
time policy, comprising time condition, wherein when the time information matches the time condition, the resource corresponding to the time condition is presented;
date policy, comprising date condition, wherein when the date information matches the date condition, the resource corresponding to the date condition is presented; and
calling ID policy, comprising calling ID condition, wherein when the ID information of calling the user matches the calling ID condition, the resource corresponding to the calling ID condition is presented.

15. The method according to any one of Claims 12 to 14, **characterized in that** the priority of the sub-policy is set by the user.

16. An apparatus for preference processing of multimedia resources a in color ring-back tone service, comprising:
related information acquiring unit, adapted to acquire related information of a user when the user is called;
sub-policy determining unit, adapted to determine a sub-policy with the highest priority among one or more sub-policies set by the user as a priority policy; and
presence unit, adapted to present resources corresponding to the priority policy when the related information matches a condition information included in the priority policy,
**characterised in that**
the priority policy comprises the following types: Simplex Rule Sub-set and Complex Rule Sub-Set,
each Simplex Rule Sub-set comprises a plurality of preference rules, wherein condition fields of the plurality of preference rules contain preference rule conditions whose types are the same, and
each Complex Rule Sub-set comprises a plurality of preference rules, wherein condition fields of the plurality of preference rules comprise two or more preference rule conditions whose types are different,
the types of the preference rule conditions comprise at least one of the followings: time, date, calling id, user presence, user location.

17. The apparatus according to Claim 16, **characterized in that** the related information comprises one or more of presence information, location information, called time information and called date information of the user and ID information of calling the user.

18. The apparatus according to Claim 17, **characterized in that** the sub-policies are respectively configured with priorities different from each other, and the sub-policy comprises one or more of the following:
user presence policy, comprising presence condition, when the presence information matches the presence condition, the resource corresponding to the presence condition is presented;
user location policy, comprising location condition, when the location information matches the location condition, the resource corresponding to the location condition is presented;
time policy, comprising time condition, when the time information matches the time condition, the resource corresponding to the time condition is presented;
date policy, comprising date condition, when the date information matches the date condition, the resource corresponding to the date condition is presented; and
calling ID policy, comprising calling ID condition, when the ID information of calling the user matches the calling ID condition, the resource corresponding to the calling ID condition is presented.

## Patentansprüche

1. System zur Präferenzverarbeitung von Multimediaressourcen in einem Farb-Freizeichenton-Dienst, umfassend:
einen Server für angepasstes Multimediaklingeln, CMR, welcher dafür eingerichtet ist, um Ressourcen zu bestimmen, welche, basierend auf einer Prioritätsrichtlinie, präsentiert werden müssen, und um die Ressourcen zu präsentieren; und
eine CMR-Benutzerschnittstelleneinheit, welche mit dem CMR-Server verbunden ist und durch welche ein Benutzer die Prioritätsrichtlinie abfragt und setzt;
**dadurch gekennzeichnet, dass**
die Prioritätsrichtlinie die folgenden Typen umfasst: Simplex-Regel-Teilmenge und Komplex-Regel-Teilmenge,
wobei jede Simplex-Regel-Teilmenge eine Mehrzahl von Präferenzregeln umfasst, wobei Bedingungsfelder von der Mehrzahl von Präferenzregeln Präferenzregelbedingungen aufweisen, deren Typen die Gleichen sind, und
wobei jede Komplex-Regel-Teilmenge eine Mehrzahl von Präferenzregeln umfasst, wobei Bedingungsfelder von jeder aus der Mehrzahl von Präferenzregeln zwei oder mehr Präferenzregelbedingungen umfasst, deren Typen unterschiedlich sind,
wobei die Typen der Präferenzregelbedingungen mindestens eine aus den folgenden umfassen: Zeit, Datum, Anruf-ID, Benutzerpräsenz, Benutzerort.

2. System nach Anspruch 1, **dadurch gekennzeichnet, dass** der CMR-Server ferner umfasst:
eine Speichereinheit, welche dafür eingerichtet ist, die Prioritätsrichtlinie zu speichern;
eine Abfrageeinheit, welche dafür eingerichtet ist, auf eine Abfrageanfrage von dem Benutzer zu antworten und die Prioritätsrichtlinie an den Benutzer über die CMR-Benutzerschnittstelle zurückzugeben;
ein Setzungsmodul, welches dafür eingerichtet ist, auf eine Setzungsanfrage von dem Benutzer zu antworten und die durch den Benutzer gesetzte Prioritätsrichtlinie in der Speichereinheit zu speichern; und
eine Präsenzkontrolleinheit, welche dafür eingerichtet ist, um die Ressourcen zu bestimmen, welche, basierend auf der Prioritätsrichtlinie, präsentiert werden müssen und um die Ressourcen zu präsentieren.

3. System nach Anspruch 1, **dadurch gekennzeichnet, dass** es ferner umfasst:
einen Präsenzserver, welcher dafür eingerichtet ist, eine Präsenzinformation des Benutzers zu erfassen und die Präsenzinformation zu dem CMR-Server zurückzuführen; und
einen Ortsserver, welcher dafür eingerichtet ist, eine Ortsinformation des Benutzers zu erfassen und die Ortsinformation zu dem CMR-Server zurückzuführen.

4. System nach Anspruch 3, **dadurch gekennzeichnet, dass** es ferner umfasst:
einen Geographieserver, welcher dafür eingerichtet ist geographische Längengrad- und Breitengradkoordinate des Benutzers zu erfassen; und
eine Geographieinformationssystem-, GIS, Einheit, welche dazu eingerichtet ist, die geographische Längengrad- und Breitengradkoordinate in eine Textinformation eines Ortes zu konvertieren und somit die Ortsinformation zu erzeugen.

5. System nach Anspruch 3, **dadurch gekennzeichnet, dass** Setzungsbedingungen der Prioritätsrichtlinie die folgenden Informationen umfassen: Benutzerpräsenzinformation, Benutzerortinformation, Zeitinformation, Datumsinformation, und Anruf-ID-Information.

6. System nach Anspruch 5, **dadurch gekennzeichnet, dass** die Prioritätsrichtlinie ein oder mehrere der folgenden Unterrichtlinien umfasst: Benutzerpräsenzrichtlinie, Benutzerortrichtlinie, Zeitrichtlinie, Datumsrichtlinie und Anruf-ID-Richtlinie.

7. System nach Anspruch 6, **dadurch gekennzeichnet, dass**
die Benutzerpräsenzrichtlinie eine Präsenzbedingung und ein Präsenzzielmodul umfasst, wobei, wenn die durch den Präsenzserver erfasste Präsenzinformation mit der Präsenzbedingung zusammenpasst, präsentiert die Präsenzkontrolleinheit die dem Präsenzzielmodul entsprechenden Präsenzzielressourcen;
die Benutzerortrichtlinie eine Ortsbedingung und ein Ortzielmodul umfasst, wobei, wenn die durch den Ortsserver erfasste Ortsinformation mit der Ortsbedingung zusammenpasst, präsentiert die Präsenzkontrolleinheit die zu dem Ortzielmodul entsprechenden Ortszielressourcen;
die Zeitrichtlinie eine Zeitbedingung und ein Zeitzielmodul umfasst, wobei, wenn eine Angerufen-Zeitinformation des Benutzers mit der Zeitbedingung zusammenpasst, präsentiert die Präsenzkontrolleinheit die zu dem Zeitzielmodul entsprechenden Zeitzielressourcen;
die Datumsrichtlinie eine Datumsbedingung und ein Datumzielmodul umfasst, wobei, wenn eine Angerufen-Datumsinformation des Benutzers mit der Datumsbedingung zusammenpasst, präsentiert die Präsenzkontrolleinheit die zu dem Datumzielmodul entsprechenden Datumzielressourcen; und
die Anruf-ID-Richtlinie eine Anruf-ID-Bedingung und ein Anruf-ID-Zielmodul umfasst, wobei, wenn eine ID-Information eines Anrufens des Benutzers mit der Anruf-ID-Bedingung zusammenpasst, präsentiert die Präsenzkontrolleinheit die dem Anruf-ID-Zielmodul entsprechenden Anruf-ID-Zielressourcen.

8. System nach Anspruch 6 oder 7, **dadurch gekennzeichnet, dass** jede Unterrichtlinie mit voneinander unterschiedlichen Prioritäten konfiguriert ist und die Unterrichtlinie mit höchster Priorität aus den Prioritätsrichtlinien die anderen Unterrichtlinien außer Kraft setzt.

9. System nach Anspruch 8, **dadurch gekennzeichnet, dass** die Priorität durch den Benutzer der CMR-Benutzerschnittstelleneinheit gesetzt ist.

10. System nach Anspruch 1, **dadurch gekennzeichnet, dass** die CMR-Benutzerschnittstelleneinheit ein CMR-Portal ist, wobei der Benutzer die Prioritätsrichtlinie durch Web/WAP abfragt und setzt.

11. System nach Anspruch 1, **dadurch gekennzeichnet, dass** die CMR-Benutzerschnittstelleneinheit ein CMR-Managementclient ist, welcher an der Endstelle des Benutzers konfiguriert ist und zur Interaktion mit dem CMR-Server in der Form eines Clients zum Abfragen und Setzen der Prioritätsrichtlinie verwendet ist.

12. Verfahren zur Präferenzverarbeitung von Multimediaressourcen in einem Farb-Freizeichenton-Dienst, umfassend die Schritte:
Erfassen (301) einer verwandten Information eines Benutzers, wenn der Benutzer angerufen wird;
Bestimmen (302) einer Unterrichtlinie mit der höchsten Priorität aus einer oder mehreren Unterrichtlinien, gesetzt durch den Benutzer als eine Prioritätsrichtlinie; und
Präsentieren von zu der Prioritätsrichtlinie entsprechenden Ressourcen, wenn die verwandte Information mit einer in der Prioritätsrichtlinie umfassten Bedingungsinformation zusammenpasst,
**dadurch gekennzeichnet, dass**
die Prioritätsrichtlinie die folgenden Typen umfasst: Simplex-Regel-Teilmenge und Komplex-Regel-Teilmenge,
wobei jede Simplex-Regel-Teilmenge eine Mehrzahl von Präferenzregeln umfasst, wobei Bedingungsfelder von der Mehrzahl von Präferenzregeln Präferenzregelbedingungen aufweisen, deren Typen die Gleichen sind, und
wobei jede Komplex-Regel-Teilmenge eine Mehrzahl von Präferenzregeln umfasst, wobei Bedingungsfelder von jeder aus der Mehrzahl von Präferenzregeln zwei oder mehr Präferenzregelbedingungen umfasst, deren Typen unterschiedlich sind,
wobei die Typen von dem Präferenzregelbedingungen mindestens eine aus den folgenden umfassen: Zeit, Datum, Anruf-ID, Benutzerpräsenz, Benutzerort.

13. Verfahren nach Anspruch 12, **dadurch gekennzeichnet, dass** die verwandte Information eine oder mehrere umfasst aus:
Präsenzinformation, Ortsinformation, Angerufen-Zeitinformation und Angerufen-Datumsinformation des Benutzers und ID-Information eines Anrufens des Benutzers.

14. Verfahren nach Anspruch 13, **dadurch gekennzeichnet, dass** die Unterrichtlinien jeweils mit voneinander unterschiedlichen Prioritäten konfiguriert sind und dass die Unterrichtlinie eine oder mehrere aus den folgenden umfasst:
Benutzerpräsenzrichtlinie, umfassend eine Präsenzbedingung, wobei, wenn die Präsenzinformation mit der Präsenzbedingung zusammenpasst, wird die zu der Präsenzbedingung entsprechende Ressource präsentiert;
Benutzerortrichtlinie, umfassend eine Ortsbedingung, wobei, wenn die Ortsinformation mit der Ortsbedingung zusammenpasst, wird die zur Ortsbedingung entsprechende Ressource präsentiert;
Zeitrichtlinie, umfassend eine Zeitbedingung, wobei, wenn die Zeitinformation mit der Zeitbedingung zusammenpasst, wird die zu der Zeitbedingung entsprechende Ressource präsentiert;
Datumsrichtlinie, umfassend eine Datumsbedingung, wobei, wenn die Datumsinformation mit der Datumsbedingung zusammenpasst, wird die zu der Datumsbedingung entsprechende Ressource präsentiert; und
Anruf-ID-Richtlinie, umfassend eine Anruf-ID-Bedingung, wobei, wenn die ID-Information eines Anrufens des Benutzers mit der Anruf-ID-Bedingung zusammenpasst, wird die zu der Anruf-ID-Bedingung entsprechende Ressource präsentiert.

15. Verfahren nach einem der Ansprüche 12 bis 14, **dadurch gekennzeichnet, dass** die Priorität der Unterrichtlinie durch den Benutzer gesetzt wird.

16. Vorrichtung zur Präferenzverarbeitung von Multimediaressourcen in einem Farb-Freizeichenton-Dienst, umfassend:
eine Erfassungseinheit für eine verwandte Information, welche dafür eingerichtet ist, eine verwandte Information eines Benutzers zu erfassen, wenn der Benutzer angerufen wird;
eine Unterrichtlinienbestimmungseinheit, welche dazu eingerichtet ist, eine Unterrichtlinie mit der höchsten Priorität aus einer oder mehreren durch den Benutzer als eine Prioritätsrichtlinie gesetzten Unterrichtlinien zu bestimmen; und
eine Präsenzeinheit, welche dafür eingerichtet ist, zu der Prioritätsrichtlinie entsprechende Ressourcen zu präsentieren, wenn die verwandte Information mit einer in der Prioritätsrichtlinie umfassten Bedingungsinformation zusammenpasst, **dadurch gekennzeichnet, dass**
die Prioritätsrichtlinie die folgenden Typen umfasst: Simplex-Regel-Teilmenge und Komplex-Regel-Teilmenge,
wobei jede Simplex-Regel-Teilmenge eine Mehrzahl von Präferenzregeln umfasst, wobei Bedingungsfelder von der Mehrzahl von Präferenzregeln Präferenzregelbedingungen aufweisen, deren Typen die Gleichen sind, und
wobei jede Komplex-Regel-Teilmenge eine Mehrzahl von Präferenzregeln umfasst, wobei Bedingungsfelder von der Mehrzahl von Präferenzregeln zwei oder mehr Präferenzregelbedingungen umfassen, deren Typen unterschiedlich sind,
wobei die Typen von dem Präferenzregelbedingungen mindestens eine aus den folgenden umfassen: Zeit, Datum, Anruf-ID, Benutzerpräsenz, Benutzerort.

17. Vorrichtung nach Anspruch 16, **dadurch gekennzeichnet, dass** die verwandte Information ein oder mehrere umfasst aus:
Präsenzinformation, Ortsinformation, Angerufen-Zeitinformation und Angerufen-Datumsinformation des Benutzers und ID-Information eines Anrufens des Benutzers.

18. Vorrichtung nach Anspruch 17, **dadurch gekennzeichnet, dass** die Unterrichtlinien jeweils mit voneinander unterschiedlichen Prioritäten konfiguriert sind und dass die Unterrichtlinie eine oder mehrere aus den folgenden umfasst:
Benutzerpräsenzrichtlinie, umfassend eine Präsenzbedingung, wobei, wenn die Präsenzinformation mit der Präsenzbedingung zusammenpasst, wird die zu der Präsenzbedingung entsprechende Ressource präsentiert;
Benutzerortrichtlinie, umfassend eine Ortsbedingung, wobei, wenn die Ortsinformation mit der Ortsbedingung zusammenpasst, wird die zur Ortsbedingung entsprechende Ressource präsentiert;
Zeitrichtlinie, umfassend eine Zeitbedingung, wobei, wenn die Zeitinformation mit der Zeitbedingung zusammenpasst, wird die zu der Zeitbedingung entsprechende Ressource präsentiert;
Datumsrichtlinie, umfassend eine Datumsbedingung, wobei, wenn die Datumsinformation mit der Datumsbedingung zusammenpasst, wird die zu der Datumsbedingung entsprechende Ressource präsentiert; und
Anruf-ID-Richtlinie, umfassend eine Anruf-ID-Bedingung, wobei, wenn die ID-Information eines Anrufens des Benutzers mit der Anruf-ID-Bedingung zusammenpasst, wird die zu der Anruf-ID-Bedingung entsprechende Ressource präsentiert.

## Revendications

1. Système de traitement de préférence de ressources multimédias dans un service de tonalité de retour d'appel couleur, comprenant :
un serveur, CMR, de sonnerie multimédia personnalisée, adapté pour déterminer des ressources, qui doivent être présentées sur la base d'une politique de priorité, et présenter les ressources ; et
une unité d'interface utilisateur CMR, qui est liée au serveur CMR, et par laquelle un utilisateur demande et règle la politique de priorité ;
**caractérisé en ce que**
la politique de priorité comprend les modèles suivants : sous-ensemble de règle simplexe et sous-ensemble de règle complexe,
chaque sous-ensemble de règle simplexe comprend une pluralité de règles de préférence, dans lequel des champs de condition de la pluralité de règles de préférence contiennent des conditions de règle de préférence dont les types sont les mêmes, et
chaque sous-ensemble de règle complexe comprend une pluralité de règles de préférence, dans lequel des champs de condition de chacune de la pluralité de règles de préférence comprennent deux ou plusieurs conditions de règle de préférence dont les types sont différents,
les types des conditions de règle de préférence comprennent au moins un des suivants : heure, date, identifiant d'appel, présence de l'utilisateur, localisation de l'utilisateur.

2. Système selon la revendication 1, **caractérisé en ce que** le serveur CMR comprend en outre :
une unité de stockage, adaptée pour stocker la politique de priorité ;
une unité d'enquête, adaptée pour répondre à une demande d'enquête de l'utilisateur, et retourner la politique de priorité à l'utilisateur par l'unité d'interface utilisateur CMR ;
un module de réglage, adapté pour répondre à une demande de réglage de l'utilisateur, et stocker la politique de priorité fixée par l'utilisateur dans l'unité de stockage ; et
une unité de contrôle de présence, adaptée pour déterminer les ressources qui doivent être présentées sur la base de la politique de priorité, et présenter les ressources.

3. Système selon la revendication 1, **caractérisé en ce qu'**il comprend en outre :
un serveur de présence, adapté pour acquérir une information de présence de l'utilisateur, et répercuter l'information de présence au serveur CMR ; et
un serveur de localisation, adapté pour acquérir une information de localisation de l'utilisateur, et répercuter l'information de localisation au serveur CMR.

4. Système selon la revendication 3, **caractérisé en ce qu'**il comprend en outre :
un serveur géographique, adapté pour acquérir une coordonnée de latitude et de longitude géographique de l'utilisateur ; et
un système d'information géographique, GIS, unité adaptée pour convertir la coordonnée de latitude et de longitude géographique en information de texte d'une localisation, et donc générer l'information de localisation.

5. Système selon la revendication 3, **caractérisé en ce que** des conditions de réglage de la politique de priorité comprennent les informations suivantes : information de présence de l'utilisateur, information de localisation de l'utilisateur, information d'heure, information de date et information d'identifiant d'appel.

6. Système selon la revendication 5, **caractérisé en ce que** la politique de priorité comprend une ou plusieurs des sous-politiques suivantes : politique de présence de l'utilisateur, politique de localisation de l'utilisateur, politique d'heure, politique de date et politique d'identifiant d'appel.

7. Système selon la revendication 6, **caractérisé en ce que**,
la politique de présence de l'utilisateur comprend une condition de présence et un module cible de présence, lorsque l'information de présence acquise par le serveur de présence correspond à la condition de présence, l'unité de contrôle de présence présente les ressources cibles de présence correspondant au module cible de présence ;
la politique de localisation de l'utilisateur comprend une condition de localisation et un module cible de localisation, lorsque l'information de localisation acquise par le serveur de localisation correspond à la condition de localisation, l'unité de contrôle de présence présente les ressources cibles de localisation correspondant au module cible de localisation ;
la politique d'heure comprend une condition d'heure et un module cible d'heure, lorsque l'information d'heure d'appel de l'utilisateur correspond à la condition d'heure, l'unité de contrôle de présence présente les ressources cibles d'heure correspondant au module cible d'heure ;
la politique de date comprend une condition de date et un module cible de date, lorsque l'information de date d'appel de l'utilisateur correspond à la condition de date, l'unité de contrôle de présence présente les ressources cibles de date correspondant au module cible de date ; et
la politique d'identifiant d'appel comprend une condition d'identifiant d'appel et un module cible d'identifiant d'appel, lorsque l'information d'identifiant d'appel de l'utilisateur correspond à la condition d'identifiant d'appel, l'unité de contrôle de présence présente les ressources cibles d'identifiant d'appel correspondant au module cible d'identifiant d'appel.

8. Système selon la revendication 6 ou 7, **caractérisé en ce que** chacune des sous-politiques est configurée avec des priorités différentes les unes des autres, et la sous-politique avec la plus grande priorité parmi les politiques de priorité invalide les autres sous-politiques.

9. Système selon la revendication 8, **caractérisé en ce que** la priorité est fixée par l'utilisateur de l'unité d'interface utilisateur CMR.

10. Système selon la revendication 1, **caractérisé en ce que**, l'unité d'interface utilisateur CMR est un portail CMR, dans lequel, l'utilisateur demande et règle la politique de priorité par Web/WAP.

11. Système selon la revendication 1, **caractérisé en ce que** l'unité d'interface utilisateur CMR est un client de gestion CMR, configuré sur le terminal de l'utilisateur et utilisé pour interagir avec le serveur CMR sous la forme d'un client qui demande et règle la politique de priorité.

12. Procédé de traitement de préférence de ressources multimédias dans un service de tonalité de retour d'appel couleur, comprenant les étapes de :
acquisition (301) d'une information liée d'un utilisateur lorsque l'utilisateur est appelé ;
détermination (302) d'une sous-politique avec la plus grande priorité parmi une ou plusieurs des sous-politiques fixée par l'utilisateur comme une politique de priorité ; et
présentation des ressources correspondant à la politique de priorité lorsque l'information liée correspond à l'information de condition comprise dans la politique de priorité,
**caractérisé en ce que**
la politique de priorité comprend les modèles suivants : sous-ensemble de règle simplexe et sous-ensemble de règle complexe,
chaque sous-ensemble de règle simplexe comprend une pluralité de règles de préférence, dans lequel des champs de condition de la pluralité de règles de préférence contiennent des conditions de règle de préférence dont les types sont les mêmes, et
chaque sous-ensemble de règle complexe comprend une pluralité de règles de préférence, dans lequel des champs de condition de chacune de la pluralité de règles de préférence comprennent deux ou plusieurs conditions de règle de préférence dont les types sont différents,
les types des conditions de règle de préférence comprennent au moins un des suivants : heure, date, identifiant d'appel, présence de l'utilisateur, localisation de l'utilisateur.

13. Procédé selon la revendication 12, **caractérisé en ce que** l'information liée comprend une ou plusieurs parmi l'information de présence, l'information de localisation, l'information d'heure d'appel et l'information de date d'appel de l'utilisateur et l'information d'identifiant d'appel de l'utilisateur.

14. Procédé selon la revendication 13, **caractérisé en ce que** les sous-politiques sont respectivement configurées avec des priorités différentes les unes des autres, et la sous-politique comprend une ou plusieurs des suivantes :
politique de présence de l'utilisateur comprenant une condition de présence, dans lequel lorsque l'information de présence correspond à la condition de présence, la ressource correspondant à la condition de présence est présentée ;
politique de localisation de l'utilisateur comprenant une condition de localisation, dans lequel lorsque l'information de localisation correspond à la condition de localisation, la ressource correspondant à la condition de localisation est présentée ;
politique d'heure, comprenant une condition d'heure, dans lequel lorsque l'information d'heure correspond à la condition d'heure, la ressource correspondant à la condition d'heure est présentée ;
politique de date, comprenant une condition de date, dans lequel lorsque l'information de date correspond à la condition de date, la ressource correspondant à la condition de date est présentée ; et
politique d'identifiant d'appel, comprenant une condition d'identifiant d'appel, dans lequel lorsque l'information d'identifiant d'appel de l'utilisateur correspond à la condition d'identifiant d'appel, la ressource correspondant à la condition d'identifiant d'appel est présentée.

15. Procédé selon l'une quelconque des revendications 12 à 14, **caractérisé en ce que** la priorité de la sous-politique est fixée par l'utilisateur.

16. Appareil de traitement de préférence de ressources multimédias dans un service de tonalité de retour d'appel couleur, comprenant :
une unité d'acquisition d'information liée, adaptée pour acquérir une information liée d'un utilisateur lorsque l'utilisateur est appelé ;
une unité de détermination de sous-politique, adaptée pour déterminer une sous-politique avec la plus grande priorité parmi une ou plusieurs des sous-politiques fixée par l'utilisateur comme une politique de priorité ; et
une unité de présence, adaptée pour présenter des ressources correspondant à la politique de priorité lorsque l'information liée correspond à une information de condition comprise dans la politique de priorité,
**caractérisé en ce que**
la politique de priorité comprend les modèles suivants : sous-ensemble de règle simplexe et sous-ensemble de règle complexe,
chaque sous-ensemble de règle simplexe comprend une pluralité de règles de préférence, dans lequel des champs de condition de la pluralité de règles de préférence contiennent des conditions de règle de préférence dont les types sont les mêmes, et
chaque sous-ensemble de règle complexe comprend une pluralité de règles de préférence, dans lequel des champs de condition de la pluralité de règles de préférence comprennent deux ou plusieurs conditions de règle de préférence dont les types sont différents,
les types des conditions de règle de préférence comprennent au moins un des suivants : heure, date, identifiant d'appel, présence de l'utilisateur, localisation de l'utilisateur.

17. Appareil selon la revendication 16, **caractérisé en ce que** l'information liée comprend une ou plusieurs parmi l'information de présence, l'information de localisation, l'information d'heure d'appel et l'information de date d'appel de l'utilisateur et l'information d'identifiant d'appel de l'utilisateur.

18. Appareil selon la revendication 17, **caractérisé en ce que** les sous-politiques sont respectivement configurées avec des priorités différentes les unes des autres, et la sous-politique comprend une ou plusieurs des suivantes :
politique de présence de l'utilisateur, comprenant une condition de présence, lorsque l'information de présence correspond à la condition de présence, la ressource correspondant à la condition de présence est présentée ;
politique de localisation de l'utilisateur, comprenant une condition de localisation, lorsque l'information de localisation correspond à la condition de localisation, la ressource correspondant à la condition de localisation est présentée ;
politique d'heure, comprenant une condition d'heure, lorsque l'information d'heure correspond à la condition d'heure, la ressource correspondant à la condition d'heure est présentée ;
politique de date, comprenant une condition de date, lorsque l'information de date correspond à la condition de date, la ressource correspondant à la condition de date est présentée ; et
politique d'identifiant d'appel, comprenant une condition d'identifiant d'appel, lorsque l'information d'identifiant d'appel de l'utilisateur correspond à la condition d'identifiant d'appel, la ressource correspondant à la condition d'identifiant d'appel est présentée.
